# EUROPEAN PATENT APPLICATION

(11) **EP 4 787 052 A1**
(43) Date of publication of application: **05.08.2026**
(21) Application number: 24869769.0
(22) Date of filing: 23.05.2024
(51) Int. Cl.: G02B 27/01

(54) **LIGHT SOURCE MODULE, IMAGE GENERATION APPARATUS, DISPLAY DEVICE, AND TRANSPORT VEHICLE**

(30) Priority: 28.09.2023 CN 202311294921
(71) Applicant: Yinwang Intelligent Technologies Co., Ltd., Shenzhen, Guangdong 518110 (CN)
(72) Inventor: DAI, Tong, Shenzhen, Guangdong 518129 (CN); JIA, Lirui, Shenzhen, Guangdong 518129 (CN); HUO, Yanfei, Shenzhen, Guangdong 518129 (CN)
(74) Representative: Maiwald GmbH
(86) International application number: PCT/CN2024/095010
(87) International publication number: WO 2025/066203

(57) **Abstract**

Embodiments of this application relate to the field of optical structures, and disclose a light source module, an image generation apparatus, a display device, and a transportation means, to improve low integration of the light source module. A specific solution is as follows: The light source module includes a substrate, a first light source, a second light source, and a third light source. The first light source, the second light source, and the third light source are disposed side by side in a first direction, and are all connected to a same side of the substrate. Light outlet directions of the first light source, the second light source, and the third light source are parallel, and light-emitting efficiency of the first light source, the second light source, and the third light source is decreased progressively. The three light sources share the substrate. This can improve integration of the light source module. The three light sources disposed side by side occupy small space. This helps reduce a volume of the light source module and improve the integration of the light source module. When the light source module is used in the image generation apparatus, luminous fluxes of light of the three light sources to a light homogenizing element are close to each other, to ensure a uniform image color.

## Description

This application claims priority to Chinese Patent Application No. 202311294921.9, filed with the China National Intellectual Property Administration on September 28, 2023 and entitled "LIGHT SOURCE MODULE, IMAGE GENERATION APPARATUS, DISPLAY DEVICE, AND TRANSPORTATION MEANS", which is incorporated herein by reference in its entirety.

### TECHNICAL FIELD

Embodiments of this application relate to the field of optical structures, and in particular, to a light source module, an image generation apparatus, a display device, and a transportation means.

### BACKGROUND

With development of display technologies, the display technologies are widely applied to various fields. For example, a head-up display (head-up display, HUD) is mounted on a transportation means, to project and display an image into a driver's front field of view.

As consumers have requirements on miniaturization of displays, how to improve integration of components in the display is correspondingly proposed, for example, how to improve integration of a light source in the display.

### SUMMARY

Embodiments of this application provide a light source module, an image generation apparatus, a display device, and a transportation means, to improve low integration of the light source module.

To achieve the foregoing objective, the following technical solutions are applied to this application.

According to a first aspect, an embodiment of this application provides a light source module. The light source module includes a substrate, a first light source, a second light source, and a third light source. The first light source, the second light source, and the third light source are disposed side by side in a first direction, and are all connected to a same side of the substrate; and light outlet directions of the first light source, the second light source, and the third light source are parallel. The first light source, the second light source, and the third light source share the substrate. This can improve integration of the light source module. The three light sources are disposed side by side. Compared with three light sources that are triangularly distributed, the three light sources disposed side by side occupy small space. This helps reduce a volume of the light source module and improve integration of the light source module. In addition, the first light source, the second light source, and the third light source are connected to the same side of the substrate. In a mounting process, mounting may be performed on the same side of the substrate. This helps improve mounting efficiency.

With reference to the first aspect, in some possible implementations, light-emitting efficiency of the first light source, the second light source, and the third light source is decreased progressively. Because each of the first light source, the second light source, and the third light source has a specific volume, a light-emitting point of the first light source, a light-emitting point of the second light source, and a light-emitting point of the third light source do not overlap, and optical axes of light emitted from the first light source, the second light source, and the third light source do not overlap. Because the light outlet directions of the first light source, the second light source, and the third light source are parallel, the optical axes are parallel when the light of the three light sources leave the light source module. Because the first light source, the second light source, and the third light source are disposed side by side in the first direction, the optical axes of the light emitted from the three light sources of the light source module are disposed side by side in the first direction. When the light source module is used in the image generation apparatus, a light homogenizing element of the image generation apparatus needs to homogenize the light emitted from the first light source, the second light source, and the third light source. When the light emitted from the first light source, the second light source, and the third light source propagates to a same region of the same light homogenizing element, that is, the light of the three light sources propagates to the light homogenizing element, the optical axes need to be coaxial, to improve integration of the image generation apparatus. In this case, the light emitted from the three light sources of the light source module needs to be changed from parallel optical axes to coaxial optical axes via an optical element (for example, a reflection element). Directions of the three optical axes may be separately changed once until the three optical axes are coaxial, to reduce a quantity of optical elements (for example, reflection elements) and an occupied volume. That is, the three parallel optical axes disposed side by side in the first direction are changed once via the optical element until the three optical axes are coaxial. It is apparent that, if the three changed coaxial optical axes are parallel to the first direction, the directions need to be changed only once. Because the first light source, the second light source, and the third light source are disposed side by side in the first direction, after the change, distances from the light homogenizing element to the three light sources propagating in the first direction are decreased progressively. For example, the first light source is farther away from the light homogenizing element than the second light source. An optical path of the light emitted from the first light source to the light homogenizing element is greater than an optical path of the light emitted from the second light source to the light homogenizing element and greater than an optical path of the light emitted from the third light source to the light homogenizing element. When the light-emitting efficiency is equal, a longer optical path indicates a smaller luminous flux of the light. In addition, the light-emitting efficiency of the first light source, the second light source, and the third light source is decreased progressively, that is, a longer optical path indicates higher light efficiency, so that a difference between luminous fluxes of the light emitted from the first light source, the second light source, and the third light source is small when the light propagates to the light homogenizing element, to make a color of image light emitted from the image generation apparatus uniform. Therefore, the first light source, the second light source, and the third light source whose light-emitting efficiency is decreased progressively are disposed side by side, so that the image generation apparatus has high integration, and the color is uniform.

With reference to the first aspect, in some possible implementations, the light source module further includes a controller. The first light source, the second light source, and the third light source are all in signal connection to the controller, and the controller is configured to control electrical signals input to the first light source, the second light source, and the third light source to decrease progressively. In this way, the controller controls a magnitude of the input electrical signal, so that the light-emitting efficiency of the first light source, the second light source, and the third light source is decreased progressively. Further, the difference between the luminous fluxes of the light emitted from the first light source, the second light source, and the third light source is small when the light propagates to the light homogenizing element, to make the color of the image light emitted from the image generation apparatus uniform.

With reference to the first aspect, in some possible implementations, the controller is configured to control currents input to the first light source, the second light source, and the third light source to decrease progressively, or the controller is configured to control voltages input to the first light source, the second light source, and the third light source to decrease progressively. The currents are decreased progressively or the voltages are decreased progressively, so that the light-emitting efficiency of the first light source, the second light source, and the third light source is decreased progressively, the difference between the luminous fluxes of the light emitted from the first light source, the second light source, and the third light source is small when the light propagates to the light homogenizing element, to make the color of the image light emitted from the image generation apparatus uniform.

With reference to the first aspect, in some possible implementations, the light source module further includes a first identification part and a second identification part. The first identification part and the second identification part are spaced apart on the substrate, a vertical projection of the first identification part on a surface of the substrate does not overlap any one of the first light source, the second light source, and the third light source, and a vertical projection of the second identification part on the surface of the substrate does not overlap any one of the first light source, the second light source, and the third light source. In this case, the first identification part and the second identification part are not covered by connection regions between the substrate and the three light sources, to avoid a case in which the first identification part and the second identification part are covered by the three light sources and cannot mark positions of the three light sources and rotation angles of light-emitting surfaces. Because the first identification part and the second identification part are spaced apart, an auxiliary line connecting the first identification part to the second identification part can mark the position of the light source and the rotation angle of the light-emitting surface. The position of the light source and the rotation angle of the light-emitting surface are marked, so that the coordinate position of the light source and the rotation angle of the light-emitting surface are more accurate.

With reference to the first aspect, in some possible implementations, the substrate includes a first bottom plate and a first insulation layer that are stacked, the first insulation layer faces the first light source, the first light source, the second light source, and the third light source all penetrate the first insulation layer and are connected to the first bottom plate. The first identification part includes a first through hole, the second identification part includes a second through hole, and the first through hole and the second through hole are disposed on the first insulation layer. The first insulation layer can avoid a short circuit between a conductive structure (for example, a metal wire) on the first bottom plate and another electrical component. In a process of forming the first insulation layer, an insulation film may be first formed, and the insulation film is etched to form the first insulation layer. In the process of forming the first insulation layer, the first through hole and the second through hole may be etched to form the first identification part and the second identification part. No additional process of forming the first identification part and the second identification part may be required. This reduces process costs.

With reference to the first aspect, in some possible implementations, the first light source includes a light-emitting device and a lens component, the light-emitting device is connected to the substrate, and the lens component is connected to an end that is of the light-emitting device and that is away from the substrate. In this way, the lens component can shape light emitted from the light-emitting device to obtain a target light beam.

With reference to the first aspect, in some possible implementations, a light reflection region is disposed on the substrate, the light reflection region is located on a side that is of the substrate and that faces the lens component, a vertical projection of the light-emitting device on the surface of the substrate does not overlap the light reflection region, and a vertical projection of the lens component on the surface of the substrate at least partially overlaps the light reflection region. Because the vertical projection of the light-emitting device on the surface of the substrate does not overlap the light reflection region, when a distance between the lens component and the surface of the substrate is measured via laser, the laser can avoid the light-emitting device when the laser is vertically incident to the light reflection region, to prevent the light-emitting device from blocking the laser. Because the vertical projection of the lens component on the surface of the substrate at least partially overlaps the light reflection region, the laser may propagate to the light reflection region through the lens component, and the distance between the lens component and the substrate is measured after the laser is emitted. In this way, disposing the light reflection region can help determine the distance between the lens component and the surface of the substrate, thereby improving mounting accuracy of the lens component, and improving optical performance of the light source module.

With reference to the first aspect, in some possible implementations, the substrate includes a second bottom plate and a second insulation layer that are stacked, the second insulation layer is located between the lens component and the second bottom plate, the light-emitting device penetrates the second insulation layer and is connected to the second bottom plate, the second insulation layer is provided with a mounting hole that penetrates the second insulation layer, and the light reflection region is located in the mounting hole. In a process of forming the second insulation layer, an insulation film may be first formed, and the insulation film is etched to form the second insulation layer. In an etching process, the mounting hole may be formed together. No additional process may be set.

With reference to the first aspect, in some possible implementations, the light source module further includes a bracket. The bracket is connected to a side that is of the substrate and that faces the first light source, and the bracket is provided with a first light transmission hole, a second light transmission hole, and a third light transmission hole. The first light source is located in the first light transmission hole, the second light source is located in the second light transmission hole, and the third light source is located in the third light transmission hole. The first light source, the second light source, and the third light source are connected to the same bracket. This can improve integration of the light source module. In addition, after the bracket is connected to one of the light sources (for example, the first light source), relative positions between the bracket and the other two light sources are fixed. This reduces an assembly and adjustment procedure, and reduces assembly and adjustment costs.

With reference to the first aspect, in some possible implementations, the light source module further includes an assembly board. The substrate and the assembly board are perpendicular to each other, and the light outlet direction of the first light source is away from the assembly board. The light source module may be connected to a structure like a housing through the assembly board when being connected to the structure like the housing. Heat of the first light source, the second light source, and the third light source is transferred to the assembly board through the substrate, and then transferred to the structure like the housing.

With reference to the first aspect, in some possible implementations, the substrate and the assembly board are connected to form an integrated component. In this way, heat of the substrate can be better conducted to the assembly board, so that heat dissipation performance of the light source module is improved.

With reference to the first aspect, in some possible implementations, the first light source includes a green light-emitting device, the second light source includes a blue light-emitting device, the third light source includes a red light-emitting device, and the green light-emitting device, the blue light-emitting device, and the red light-emitting device are all connected to the same side of the substrate. White light may be obtained after the light emitted from the first light source, the second light source, and the third light source is modulated.

According to a second aspect, an embodiment of this application provides an image generation apparatus. The image generation apparatus includes a light homogenizing element and any light source module provided in the first aspect. The light homogenizing element is configured to homogenize light emitted from the first light source, the second light source, and the third light source. Optical paths in which the light emitted from the first light source, the second light source, and the third light source propagates to the light homogenizing element are increased progressively. Because the light source module has high integration, the image generation apparatus also has corresponding high integration, and the image generation apparatus occupies a small volume.

With reference to the second aspect, in some implementations, the image generation apparatus further includes a first reflection element, a second reflection element, and a third reflection element that are disposed side by side in the first direction. The first reflection element is configured to: reflect light emitted from the first light source, and then project reflected light to the light homogenizing element through the second reflection element and the third reflection element in sequence. The second reflection element is configured to: reflect light emitted from the second light source, and then project reflected light to the light homogenizing element through the third reflection element. The third reflection element is configured to reflect light emitted from the third light source to the light homogenizing element. Therefore, the first reflection element, the second reflection element, and the third reflection element may change directions of light beams of the three light sources, so that the directions of the light beams of the three light sources pass through the same light homogenizing element. This improves integration of the image generation apparatus.

According to a third aspect, an embodiment of this application provides a display device. The display device includes a processor and any image generation apparatus provided in the second aspect. The processor is configured to send image data to the image generation apparatus. Because the image generation apparatus has high integration, the display device also has high integration, and has an advantage of a small volume.

According to a fourth aspect, an embodiment of this application provides a transportation means. The transportation means includes a reflection element and any display device provided in the third aspect. The display device is configured to emit a light beam, and the reflection element is configured to reflect the light beam emitted from the display device. Because the display device has a small volume, the display device occupies small space of the transportation means, thereby improving user experience.

### BRIEF DESCRIPTION OF DRAWINGS

FIG. 1a is a diagram of a structure of a transportation means;
FIG. 1b is a diagram of an optical path structure of an AR-HUD;
FIG. 2 is a diagram of an internal structure of an image generation apparatus according to an embodiment of this application;
FIG. 3 is a diagram of a structure of a light source and a light homogenizing plate in a related technology;
FIG. 4 is a diagram of an exploded structure of a light source module according to an embodiment of this application;
FIG. 5 is a diagram of a structure of a light source module according to an embodiment of this application;
FIG. 6 is a diagram of a structure of a substrate and a lens component according to an embodiment of this application;
FIG. 7 is a diagram of another structure of an image generation apparatus according to an embodiment of this application; and
FIG. 8 is a diagram of still another structure of an image generation apparatus according to an embodiment of this application.

In the figures, 10: display device; 20: transportation means; 21: reflection element; 11: image generation apparatus; 100: light source module; 12: processor; 13: light homogenizing element; 14: optical modulator; 110: first light source; 120: second light source; 130: third light source; 101: first light beam; 102: second light beam; 103: third light beam; 01: light source; 02: light homogenizing plate; 001: first light-emitting group; 002: second light-emitting group; 003: third light-emitting group; 004: base; 104: first reflection element; 105: second reflection element; 106: third reflection element; 140: substrate; 141: first bottom plate; 142: second bottom plate; 144: assembly board; 150: bracket; 151: first light transmission hole; 152: second light transmission hole; 153: third light transmission hole; 161: first identification part; 162: second identification part; 171: first insulation layer; 172: first through hole; 173: second through hole; 174: second insulation layer; 175: mounting hole; 111: light-emitting device; 112: lens component; 1121: first collimation lens; 1122: second collimation lens; 180: light reflection region; and 201: controller.

### DESCRIPTION OF EMBODIMENTS

To make objectives, technical solutions, and advantages of this application clearer, the following further describes this application in detail with reference to accompanying drawings.

Terms "first" and "second" mentioned below are merely intended for a purpose of description, and shall not be understood as an indication or implication of relative importance or implicit indication of a quantity of indicated technical features. Therefore, a characteristic limited by "first", "second", or the like may explicitly or implicitly include one or more characteristics. In descriptions of this application, unless otherwise stated, "a plurality of" means two or more than two.

In addition, in this application, position terms such as "top" and "bottom" are defined relative to positions of components in the accompanying drawings. It should be understood that these direction terms are relative concepts used for relative description and clarification, and may change correspondingly based on changes of positions in which components are placed in the accompanying drawings.

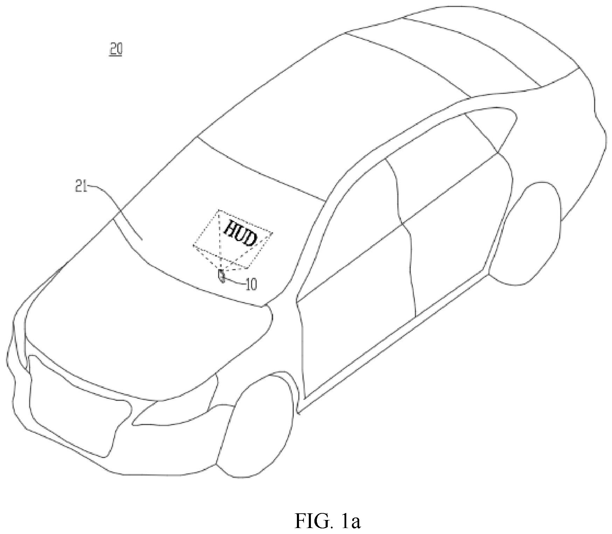

An embodiment of this application provides a transportation means, including but not limited to a vehicle, a ship, and an aircraft. The following uses an example in which the transportation means is a vehicle for description. The vehicle may be a car, a bus, a truck, a toy car, or the like. In FIG. 1a, a vehicle is used as an example for description.

FIG. 1a is a diagram of a structure of a transportation means 20. As shown in FIG. 1a, the transportation means 20 includes a reflection element 21 and a display device 10. The display device 10 is configured to emit a light beam, and the reflection element 21 is configured to reflect the light beam emitted from the display device 10.

A position of the display device 10 in the transportation means 20 is not limited in embodiments of this application. In some embodiments, the display device 10 is integrated into a head-up display (HUD). An image projected by the head-up display is reflected by the reflection element 21, and then, a virtual image is formed outside the vehicle. The head-up display can project status information of the transportation means, indication information of an external object, navigation information, and the like into a driver's front field of view, to prevent the driver from looking down to view the information, which does not affect driving safety. For example, the status information includes information such as a driving speed, a driving mileage, a fuel amount, a water temperature, and a light status. The indication information of the external object includes a safety distance, a surrounding obstacle, a reversing image, and the like. The navigation information includes a direction arrow, a distance, a driving time, and the like.

For example, the reflection element 21 may be a windshield. The windshield has reflection performance, and can reflect image light emitted from the display device 10 to human eyes.

A type of the head-up display includes but is not limited to a combiner head-up display (combiner-HUD, C-HUD) system, a windshield head-up display (windshield-HUD, W-HUD), and an augmented reality head-up display (augmented reality HUD, AR-HUD) system. In this embodiment of this application, an example in which the display device 10 is integrated into the AR-HUD is used for description.

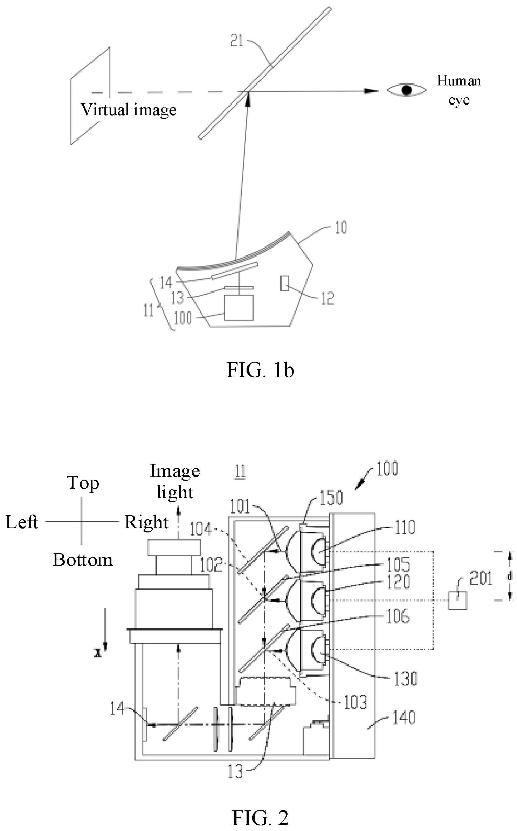

FIG. 1b is a diagram of an optical path structure of an AR-HUD. Refer to FIG. 1b. The display device 10 includes an image generation apparatus (picture generation unit, PGU) 11 and a processor 12. The image generation apparatus 11 is in signal connection to the processor 12, and the processor 12 is configured to send image data to the image generation apparatus 11. For example, the display device 10 may include one or more processors 12. The processor 12 is, for example, a graphics processing unit (graphic processing unit, GPU).

FIG. 2 is a diagram of an internal structure of an image generation apparatus 11 according to an embodiment of this application. Refer to FIG. 2. The image generation apparatus 11 includes a light source module 100 and a light homogenizing element 13. Light output by the light source module 100 is homogenized after propagating to the light homogenizing element 13, and then modulated. For example, the image generation apparatus 11 further includes an optical modulator 14, and the optical modulator 14 is configured to modulate light emitted from the light homogenizing element 13. The optical modulator 14 is in signal connection to the processor 12 (as shown in FIG. 1b). The optical modulator 14 receives image data of the processor 12 (as shown in FIG. 1b), and modulates, based on the image data, a light beam output from the light source module 100, to generate imaging light including image information. The imaging light is reflected by the reflection element 21 (as shown in FIG. 1b) after propagating to the reflection element 21, and then enters human eyes.

The light source module 100 includes a first light source 110, a second light source 120, and a third light source 130. The first light source 110 emits a first light beam 101, the second light source 120 emits a second light beam 102, and the third light source 130 emits a third light beam 103. The light homogenizing element 13 needs to homogenize the first light beam 101, the second light beam 102, and the third light beam 103.

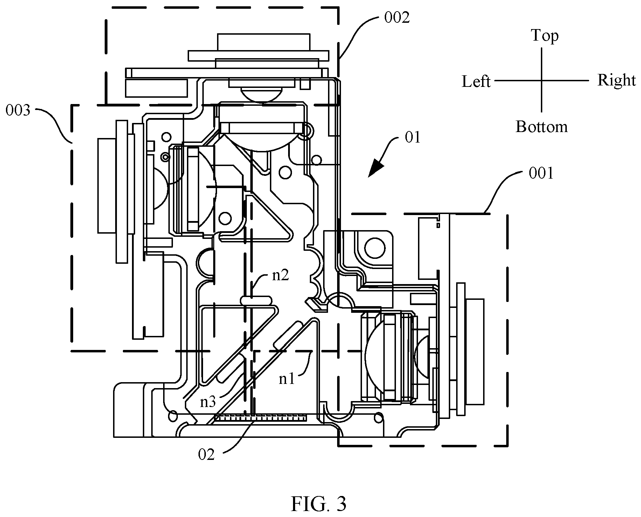

FIG. 3 is a diagram of a structure of a light source 01 and a light homogenizing plate 02 in a related technology. Refer to FIG. 3. The light source 01 includes a first light-emitting group 001, a second light-emitting group 002, a third light-emitting group 003, and a base 004. The first light-emitting group 001, the second light-emitting group 002, and the third light-emitting group 003 are all connected to the base 004. The light homogenizing plate 02 is located on a light outlet side of the first light-emitting group 001, the second light-emitting group 002, and the third light-emitting group 003.

In FIG. 3, to ensure that light emitted by the first light-emitting group 001, the second light-emitting group 002, and the third light-emitting group 003 has equal luminous fluxes when propagating to the light homogenizing plate 02, a light outlet direction of the first light-emitting group 001 is leftward, a light outlet direction of the second light-emitting group 002 is rightward, and a light outlet direction of the third light-emitting group 003 is downward. In addition, through an optical path design, an optical path n1 from the first light-emitting group 001 to the light homogenizing plate 02, an optical path n2 from the second light-emitting group 002 to the light homogenizing plate 02, and an optical path n3 from the third light-emitting group 003 to the light homogenizing plate 02 are equal.

It may be seen from FIG. 3 that the first light-emitting group 001, the second light-emitting group 002, and the third light-emitting group 003 have different mounting positions, and need to be aligned with the positions respectively, resulting in reduced mounting accuracy. In addition, each light-emitting group includes a copper plate, a lens support, an LED (light-emitting diode) light source, a collimation lens, and the like. Because the mounting positions of the three light-emitting groups are different, structures such as the copper plate and the lens support need to be separately disposed in each light-emitting group, resulting in low integration. It is apparent that an image generation apparatus including the light source 01 and the light homogenizing plate 02 shown in FIG. 3 has a large volume and low integration.

The light source module 100 provided in this embodiment of this application has an advantage of high integration. The image generation apparatus 11 including the light source module 100 also has an advantage of high integration.

As shown in FIG. 2, the first light source 110, the second light source 120, and the third light source 130 are disposed side by side in a first direction. For ease of description, the first direction is defined as an x direction. The light source module 100 further includes a substrate 140, and the first light source 110, the second light source 120, and the third light source 130 are all connected to a same side of the substrate 140. Light outlet directions of the first light source 110, the second light source 120, and the third light source 130 are the same.

The first light source 110, the second light source 120, and the third light source 130 are connected to the same side of the substrate 140, and the three light sources share the substrate 140. This can improve integration of the light source module 100. In addition, the three light sources are disposed side by side. Compared with three light sources that are triangularly distributed, the three light sources disposed side by side occupy small space. This helps reduce a volume of the light source module 100. In addition, because the first light source 110, the second light source 120, and the third light source 130 are located on the same side of the substrate 140, the three light sources have a small degree of freedom in a process of assembling the first light source 110, the second light source 120, and the third light source 130. This helps improve mounting accuracy.

In FIG. 2, because each of the first light source 110, the second light source 120, and the third light source 130 has a specific volume, there is a specific distance (for example, a distance d in FIG. 2) between a light-emitting point of the first light source 110 and a light-emitting point of the second light source 120. Similarly, there is a specific distance between the light-emitting point of the second light source 120 and a light-emitting point of the third light source 130. The light-emitting point of the first light source 110, the light-emitting point of the second light source 120, and the light-emitting point of the third light source 130 do not overlap.

In some embodiments, to further improve integration of the image generation apparatus 11, the first light beam 101, the second light beam 102, and the third light beam 103 share the same light homogenizing element 13, and the first light beam 101, the second light beam 102, and the third light beam 103 pass through a same region of the light homogenizing element 13 in a same direction. In other words, when the first light beam 101, the second light beam 102, and the third light beam 103 propagate to the light homogenizing element 13, optical axes of the first light beam 101, the second light beam 102, and the third light beam 103 are coaxial.

In addition, the first light beam 101, the second light beam 102, and the third light beam 103 have equal luminous fluxes when propagating to the light homogenizing element 13, to make a color of image light emitted from the image generation apparatus 11 uniform. The luminous flux is related to a light propagation distance, namely, an optical path.

In some embodiments of this application, light-emitting efficiency of the first light source 110, the second light source 120, and the third light source 130 is decreased progressively. In other words, the light-emitting efficiency of the first light source 110 is greater than the light-emitting efficiency of the second light source 120, and the light-emitting efficiency of the second light source 120 is greater than the light-emitting efficiency of the third light source 130.

As described above, when the first light beam 101, the second light beam 102, and the third light beam 103 propagate to the light homogenizing element 13, the optical axes of the first light beam 101, the second light beam 102, and the third light beam 103 are coaxial, to improve the integration of the image generation apparatus 11.

In FIG. 2, the first light source 110 is farther away from the light homogenizing element 13 than the second light source 120. The first light source 110, the second light source 120, and the third light source 130 are disposed side by side in the x direction, and the light outlet directions face the same side of the substrate 140. In this case, optical axes at light outlets of the first light source 110, the second light source 120, and the third light source 130 are spaced apart in the x direction. To make the optical axes of the three light sources coaxial during propagation to the light homogenizing element 13, the three optical axes spaced apart in the x direction need to be changed to overlap. Directions of the three optical axes are separately changed once, to reduce a quantity of optical elements and an occupied volume in a process of changing the optical axes. If the three changed optical axes are all perpendicular to the x direction, the directions of the three optical axes may be separately changed only once, and the three changed optical axes are coaxial.

Positions in FIG. 2 are used as an example. Directions of the first light beam 101, the second light beam 102, and the third light beam 103 that are emitted from the light source module 100 are all leftward. After one change, the first light beam 101, the second light beam 102, and the third light beam 103 all propagate downward and pass through the light homogenizing element 13. A mounting position of an element (for example, a reflection element) that changes the three propagation directions may be adjusted, so that the first light beam 101, the second light beam 102, and the third light beam 103 are coaxial during downward propagation.

It may be understood that, that the first light beam 101, the second light beam 102, and the third light beam 103 are coaxial is not limited to that the optical axes of the three light beams need to be collinear. A distance between every two of the optical axes of the three light beams and an included angle between every two of the optical axes of the three light beams may fall within an operating error range. For example, the distance between every two of the optical axes of the three light beams ranges from 0 µm to 10 µm, and the included angle between the optical axes ranges from 0° to 10°.

In FIG. 2, directions of the first light beam 101, the second light beam 102, and the third light beam 103 that are incident to the light homogenizing element 13 are all the x direction. In addition, directions in which the first light source 110, the second light source 120, and the third light source 130 are arranged are the x direction, and the first light source 110, the second light source 120, and the third light source 130 are all connected to the substrate 140, so that an optical path in which the first light beam 101 propagates from a light-emitting position of the first light source 110 to the light homogenizing element 13 is greater than an optical path in which the second light beam 102 propagates from a light-emitting position of the second light source 120 to the light homogenizing element 13, and is further greater than an optical path in which the third light beam 103 propagates from a light-emitting position of the third light source 130 to the light homogenizing element 13. In addition, the light-emitting efficiency of the first light source 110, the second light source 120, and the third light source 130 is decreased progressively, in other words, when the light beams propagate to the light homogenizing element 13, an optical path with high efficiency is long, and an optical path with low efficiency is short, so that a difference between the luminous fluxes of the first light beam 101, the second light beam 102, and the third light beam 103 is small when the first light beam, the second light beam, and the third light beam propagate to the light homogenizing element 13, to make the color of the image light emitted from the image generation apparatus 11 uniform.

That the light-emitting efficiency of the first light source 110, the second light source 120, and the third light source 130 is decreased progressively may be implemented via structures of the light sources, or may be implemented by controlling currents or voltages input to the light sources, or may be implemented through both of the foregoing two means.

In some embodiments of this application, the light source module 100 further includes a controller 201. The first light source 110, the second light source 120, and the third light source 130 are all in signal connection to the controller 201. The controller 201 is configured to control electrical signals input to the first light source 110, the second light source 120, and the third light source 130 to decrease progressively. The electrical signal may be a current or a voltage. In other words, the controller 201 controls the current input to the first light source 110 to be greater than the current input to the second light source 120 and greater than the current input to the third light source 130. Because the light-emitting efficiency is positively correlated with the current, a higher input current indicates higher light-emitting efficiency. Alternatively, the controller 201 controls the voltage input to the first light source 110 to be greater than the voltage input to the second light source 120 and greater than the voltage input to the third light source 130. Because the light-emitting efficiency is positively correlated with the voltage, a higher input voltage indicates higher light-emitting efficiency. In this way, the controller 201 controls a magnitude of the input electrical signal, so that the light-emitting efficiency of the first light source 110, the second light source 120, and the third light source 130 is decreased progressively. Further, the difference between the luminous fluxes of the first light beam 101, the second light beam 102, and the third light beam 103 is small when the first light beam, the second light beam, and the third light beam propagate to the light homogenizing element 13, to make the color of the image light emitted from the image generation apparatus 11 uniform.

It may be understood that, in another embodiment of this application, the light-emitting efficiency of the first light source 110, the second light source 120, and the third light source 130 is not limited to being decreased progressively. For example, the light-emitting efficiency of the first light source 110, the second light source 120, and the third light source 130 may be equal. If the difference between the luminous fluxes of the light transmitted from the first light source 110, the second light source 120, and the third light source 130 to the light homogenizing element 13 is large, the light emitted from the three light sources may be modulated via a processing chip like a liquid crystal on silicon (liquid crystal on silicon, LCOS) chip, to make the color of the image light emitted from the image generation apparatus 11 uniform. Alternatively, the light emitted from the three light sources may be modulated via an optical element like an anti-reflective film, to make the color of the image light emitted from the image generation apparatus 11 uniform.

The substrate 140 is not limited in embodiments of this application. For example, the substrate 140 may be a printed circuit board (printed circuit board printed circuit board, PCB). A material of the substrate 140 may include, for example, copper. The copper has excellent thermal conductivity, and can dissipate heat for the first light source 110, the second light source 120, and the third light source 130, thereby improving heat dissipation performance of the light source module 100.

Colors of the light beams emitted from the first light source 110, the second light source 120, and the third light source 130 are not limited in embodiments of this application. For example, the first light source 110 emits green light, red light, or blue light, the second light source 120 emits green light, red light, or blue light, and the third light source 130 emits green light, red light, or blue light. For example, the first light source 110 emits green light, the second light source 120 emits blue light, and the third light source 130 emits red light.

For example, the first light source 110 includes a green light-emitting device, the second light source 120 includes a blue light-emitting device, and the third light source 130 includes a red light-emitting device. The green light-emitting device, the blue light-emitting device, and the red light-emitting device are all connected to the same side of the substrate 140. It may be understood that, in another embodiment, the colors of the light beams emitted from the first light source 110, the second light source 120, and the third light source 130 may be other colors. The light beam may alternatively be an invisible light beam. This is not limited in embodiments of this application.

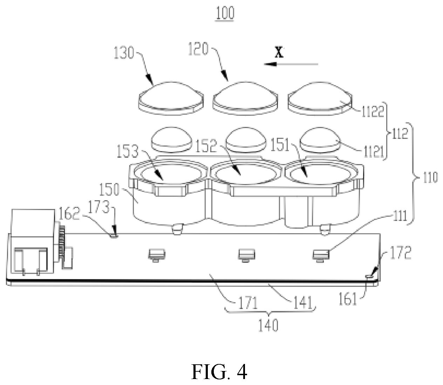

FIG. 4 is a diagram of an exploded structure of the light source module 100 according to an embodiment of this application. Refer to FIG. 4. In some embodiments, the light source module 100 further includes a bracket 150, and the bracket 150 is connected to a side that is of the substrate 140 and that faces the first light source 110. The bracket 150 is provided with a first light transmission hole 151, a second light transmission hole 152, and a third light transmission hole 153. The first light source 110 is located in the first light transmission hole 151, the second light source 120 is located in the second light transmission hole 152, and the third light source 130 is located in the third light transmission hole 153. In this way, a light source emitted from the first light source 110 may be emitted from the first light transmission hole 151, a light source emitted from the second light source 120 may be emitted from the second light transmission hole 152, and a light source emitted from the third light source 130 may be emitted from the third light transmission hole 153. The first light source 110, the second light source 120, and the third light source 130 are connected to the same bracket 150. This can improve integration of the light source module 100. In addition, after the bracket 150 is connected to one of the light sources (for example, the first light source 110), relative positions between the bracket and the other two light sources are fixed. This reduces an assembly and adjustment procedure, and reduces assembly and adjustment costs.

A manner of connecting the bracket 150 to the substrate 140 is not limited in embodiments of this application. For example, the bracket 150 is connected to the substrate 140 are connected through an adhesive layer. Alternatively, the bracket 150 is screwed or welded with the substrate 140. A material of the bracket 150 is not limited in embodiments of this application, for example, may be high-temperature-resistant plastic.

As described above, the first light source 110, the second light source 120, and the third light source 130 are spaced apart in an x direction. A distance between every two of the first light source 110, the second light source 120, and the third light source 130 in the x direction is not limited in embodiments of this application. Design may be performed based on an actual requirement.

Return to FIG. 2. As described above, an optical axis of the first light beam 101 emitted from the first light source 110 is perpendicular to the x direction. In FIG. 2, an optical axis of the first light beam 101 emitted from the first light source 110 is leftward. Similarly, optical axes of the emitted second light beam 102 and third light beam 103 are also leftward. When the first light beam 101, the second light beam 102, and the third light beam 103 propagate to the light homogenizing element 13, the optical axes of the first light beam 101, the second light beam 102, and the third light beam 103 are coaxial. In this case, propagation directions of the first light beam 101, the second light beam 102, and the third light beam 103 all need to be changed during propagation to the light homogenizing element 13.

In FIG. 2, the image generation apparatus 11 further includes a first reflection element 104, a second reflection element 105, and a third reflection element 106. The first reflection element 104, the second reflection element 105, and the third reflection element 106 are spaced apart in the x direction. The first reflection element 104 is configured to: reflect light emitted from the first light source 110, and then project reflected light to the light homogenizing element 13 through the second reflection element 105 and the third reflection element 106 in sequence. The second reflection element 105 is configured to: reflect light emitted from the second light source 120, and then project reflected light to the light homogenizing element 13 through the third reflection element 106. The third reflection element 106 is configured to reflect the light emitted from the third light source 130 to the light homogenizing element 13. In this way, the first reflection element 104, the second reflection element 105, and the third reflection element 106 are disposed, so that the first light beam 101, the second light beam 102, and the third light beam 103 can pass through the same light homogenizing element 13.

Further, mounting positions of the first reflection element 104, the second reflection element 105, and the third reflection element 106 may be disposed, so that the first light beam 101, the second light beam 102, and the third light beam 103 can be projected to a same region of the light homogenizing element 13. In this way, propagation paths of the first light beam 101, the second light beam 102, and the third light beam 103 can be changed.

As described above, the light emitted from the first light source 110 needs to pass through the second reflection element 105 and the third reflection element 106. In this process, the luminous flux of the light emitted from the first light source 110 is decreased. The light emitted from the second light source 120 needs to pass through the third reflection element 106. In this process, the luminous flux of the light emitted from the second light source 120 is decreased. During propagation, the light emitted from the first light source 110, the second light source 120, and the third light source 130 has different luminous flux losses. In an embodiment in which the light-emitting efficiency of the first light source 110, the second light source 120, and the third light source 130 is decreased progressively, a difference between the losses may be reduced by decreasing the light-emitting efficiency progressively, so that a difference between the luminous fluxes of the light of the three light sources projected to the light homogenizing element 13 is smaller, to help make the color of an image output by the image generation apparatus 11 uniform.

In a process in which the first light source 110, the second light source 120, and the third light source 130 are connected to the substrate 140, to enable coordinates of mounting positions of the first light source 110, the second light source 120, and the third light source 130 on the substrate 140 to be designed position coordinates, in some embodiments of this application, the light source module 100 further includes a first identification part 161 and a second identification part 162. The first identification part 161 and the second identification part 162 are configured to mark positions of the first light source 110, the second light source 120, and the third light source 130 and rotation angles of light-emitting surfaces.

The first identification part 161 and the second identification part 162 are spaced apart on the substrate 140. A vertical projection of the first identification part 161 on a surface of the substrate 140 does not overlap any one of the first light source 110, the second light source 120, and the third light source 130. For example, the vertical projection of the first identification part 161 on the surface of the substrate 140 does not intersect or does not completely overlap a vertical projection of the first light source 110 on the surface of the substrate 140. A relationship between the first identification part 161 and the second light source 120 or the third light source 130 is similar to that described above. A vertical projection of the second identification part 162 on the surface of the substrate 140 does not overlap any one of the first light source 110, the second light source 120, and the third light source 130.

In this case, the first identification part 161 and the second identification part 162 are not covered by connection regions between the substrate 140 and the three light sources, to avoid a case in which the first identification part 161 and the second identification part 162 are covered by the three light sources and cannot mark the positions of the three light sources and the rotation angles of the light-emitting surfaces.

Because the first identification part 161 and the second identification part 162 are spaced apart, an auxiliary line connecting the first identification part 161 to the second identification part 162 can mark the position of the light source and the rotation angle of the light-emitting surface. The position of the light source and the rotation angle of the light-emitting surface are marked, so that the coordinate position of the light source and the rotation angle of the light-emitting surface are more accurate.

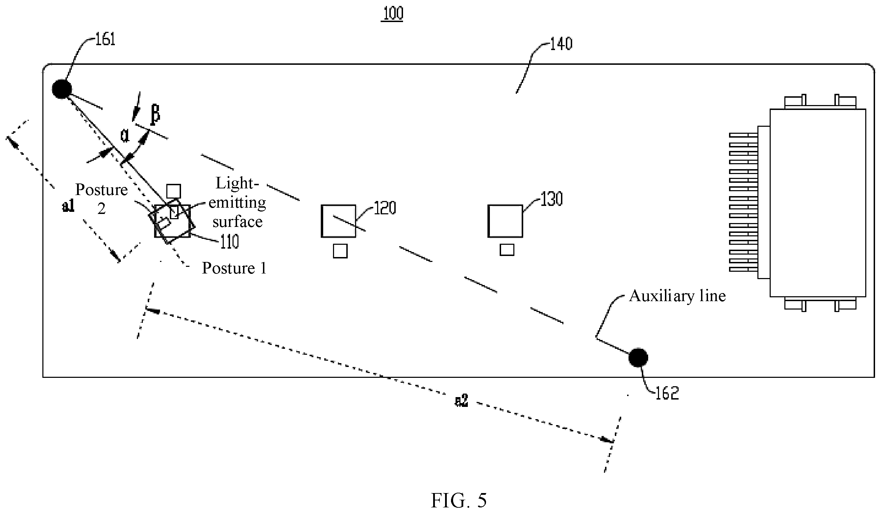

Relative positions between the first identification part 161 and the three light sources and relative positions between the second identification part 162 and the three light sources are not limited in embodiments of this application. The following uses an example in which the first identification part 161 and the second identification part 162 mark the first light source 110 as an example for description with reference to FIG. 5.

FIG. 5 is a diagram of a structure of the light source module 100 according to an embodiment of this application. In FIG. 5, a distance from the first identification part 161 to the first light source 110 is a1, and a distance from the second identification part 162 to the first light source 110 is a2. After a1 and a2 are determined, a position of the first light source 110 is uniquely determined, to mark the first light source 110.

For example, the rotation angle of the light-emitting surface of the first light source 110 may be determined based on an included angle between the auxiliary line and a connection line between any point on the auxiliary line and the light-emitting surface of the first light source 110. In FIG. 5, an included angle between the auxiliary line and a connection line between the light-emitting surface of the first light source 110 and a point that is on the auxiliary line and at which the first identification part 161 is located is used as an example. It may be understood that, in an example in which an area of the light-emitting surface is large, the connection line may be a connection line between a geometric center of the light-emitting surface and any point on the auxiliary line; or the connection line may be a connection line between a midpoint of a side line of the light-emitting surface and any point on the auxiliary line.

In FIG. 5, when the position of the first light source 110 is uniquely determined, an included angle between the light-emitting surface of the first light source 110 and the auxiliary line has a plurality of values. For example, when a mounting posture of the first light source 110 is a posture 1, the included angle between the light-emitting surface of the first light source 110 and the auxiliary line is β. When a mounting posture of the first light source 110 is a posture 2, the included angle between the light-emitting surface of the first light source 110 and the auxiliary line is α. It is apparent that the mounting posture of the first light source 110 may be determined by detecting the included angle between the light-emitting surface of the first light source 110 and the auxiliary line. A shape of the light-emitting surface is not limited in embodiments of this application. For example, the light-emitting surface may be rectangular.

Similarly, the first identification part 161 and the second identification part 162 may mark the position of the first light source 110 and the rotation angle of the light-emitting surface. Details are not described herein again.

Structures of the first identification part 161 and the second identification part 162 are not limited in embodiments of this application. For example, the first identification part 161 is of a groove structure, and the groove structure is disposed on the substrate 140. Alternatively, the first identification part 161 is a protrusion disposed on the substrate 140. Alternatively, the first identification part 161 is a coating connected to the substrate 140. Further, a shape of the first identification part 161 may be a digit, a letter, a Chinese character, an irregular shape, or the like. The second identification part 162 is similar to the first identification part. Details are not described herein again.

Return to FIG. 4. In an example in FIG. 4, the substrate 140 includes a first bottom plate 141 and a first insulation layer 171 that are stacked, and the first insulation layer 171 covers a surface that is of the first bottom plate 141 and that faces the first light source 110. The first identification part 161 includes a first through hole 172, and the second identification part 162 includes a second through hole 173. The first through hole 172 and the second through hole 173 are disposed on the first insulation layer 171. The first insulation layer 171 can avoid a short circuit between a conductive structure (for example, a metal wire) on the first bottom plate 141 and another electrical component. In a process of forming the first insulation layer 171, an insulation film may be first formed, and the insulation film is etched to form the first insulation layer 171. In the process of forming the first insulation layer 171, the first through hole 172 and the second through hole 173 may be etched to form the first identification part 161 and the second identification part 162. No additional process of forming the first identification part 161 and the second identification part 162 may be set. This reduces process costs.

In an embodiment in which a material of the first bottom plate 141 includes copper, the first through hole 172 penetrates the first insulation layer 171 to expose the surface of the first bottom plate 141. Excellent gloss performance of the copper can make the first identification part 161 easier to be identified. In a mounting process, a position of the first identification part 161 can be quickly determined, and similarly, the second identification part 162 can be quickly identified. This improves mounting efficiency of the light source module 100.

A material of the first insulation layer 171 is not limited in embodiments of this application. For example, the material of the first insulation layer 171 includes a liquid photoimagable solder mask (also referred to as green oil).

A structure of the first light source 110 is not limited in embodiments of this application. In FIG. 4, the first light source 110 includes a light-emitting device 111 and a lens component 112. The light-emitting device 111 is connected to the substrate 140, and the lens component 112 is located on a light outlet side of the light-emitting device 111. In this way, the lens component 112 can shape light emitted from the light-emitting device 111 to obtain a target light beam.

A type of the light-emitting device 111 is not limited in embodiments of this application. For example, the light-emitting device 111 may be an LED.

A structure of the lens component 112 is not limited embodiments of this application. In some embodiments, the lens component 112 includes a first collimation lens 1121 and a second collimation lens 1122, and the first collimation lens 1121 and the second collimation lens 1122 are stacked in a direction away from the light-emitting device 111. The light emitted from the light-emitting device 111 is collimated after passing through the first collimation lens 1121 and the second collimation lens 1122 in sequence.

Similarly, each of the second light source 120 and the third light source 130 may also include a light-emitting device 111 and a lens component 112. Details are not described herein again.

In an embodiment in which the light source module 100 includes the bracket 150, the lens component 112 is connected to the bracket 150. The lens component 112 of the first light source 110 is located in the first light transmission hole 151 and is connected to the first light transmission hole 151. The lens components 112 of the second light source 120 and the third light source 130 are connected to the second light transmission hole 152 and the third light transmission hole 153 respectively. The bracket 150 reduces a degree of freedom of the lens component 112, and reduces assembly and adjustment costs. In addition, the three lens components 112 share one bracket 150. This can reduce a quantity of parts of the light source module 100, and improve integration.

In some embodiments, in a process of mounting the lens component 112, a distance between the lens component 112 and the light-emitting device 111 needs to be determined, or a distance between the lens component 112 and the surface of the substrate 140 needs to be determined. Generally, the foregoing distance may be measured in a laser test manner. For example, laser is irradiated on the substrate 140 and then reflected to a laser receiver, to obtain the distance between the substrate 140 and the lens component 112. In addition, because the surface of the substrate 140 has a plurality of structures (for example, wiring and an electrical connector), the plurality of structures affect reflection of the laser, to affect a measurement result and a mounting position of the lens component 112.

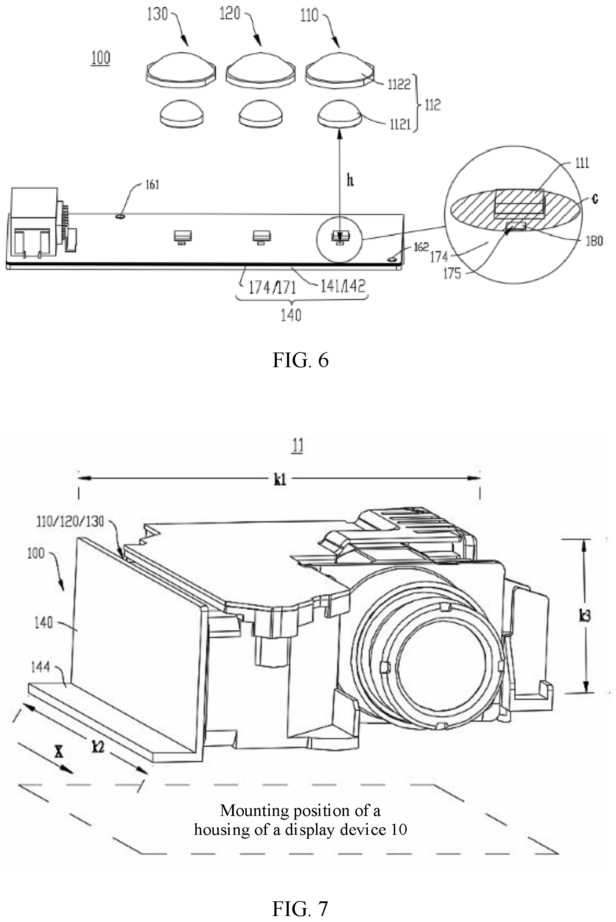

FIG. 6 is a diagram of a structure of the substrate 140 and the lens component 112 according to an embodiment of this application. Refer to FIG. 6. In some embodiments, a light reflection region 180 is disposed on the substrate 140. The light reflection region 180 is located on a side that is of the substrate 140 and that faces the lens component 112. A vertical projection of the light-emitting device 111 on the surface of the substrate 140 does not overlap the light reflection region 180. A vertical projection (a region c in FIG. 6) of the lens component 112 on the surface of the substrate 140 at least partially overlaps the light reflection region 180. Because the vertical projection of the light-emitting device 111 on the surface of the substrate 140 does not overlap the light reflection region 180, the laser may avoid the light-emitting device 111 when the laser is vertically incident to the light reflection region 180, to prevent the light-emitting device 111 from blocking the laser. Because the region c at least partially overlaps the light reflection region 180, the region c is close to the light-emitting device 111, accuracy of measuring a distance h between the light reflection region 180 and the substrate 140 via the laser is high, and measurement is more accurate. In this way, disposing the light reflection region 180 helps determine the distance h between the lens component 112 and the surface of the substrate 140, thereby improving mounting accuracy of the lens component 112, and improving optical performance of the light source module 100.

That the vertical projection of the light-emitting device 111 on the surface of the substrate 140 does not overlap the light reflection region 180 includes: The vertical projection of the light-emitting device 111 on the surface of the substrate 140 and the light reflection region 180 are spaced apart; or a part of the light reflection region 180 is in the vertical projection of the light-emitting device 111 on the surface of the substrate 140, and another part of the light reflection region 180 is outside the projection.

Similarly, that the region c at least partially overlaps the light reflection region 180 includes: The region c overlaps the light reflection region 180; or a part of the light reflection region 180 is in the region c, and another part of the light reflection region 180 is outside the region c.

In an example in FIG. 6, the substrate 140 includes a second bottom plate 142 and a second insulation layer 174, and an end that is of the light-emitting device 111 and that is away from the lens component 112 penetrates the second insulation layer 174 and is connected to the substrate 140. The second insulation layer 174 is located between the lens component 112 and the second bottom plate 142. The second insulation layer 174 is provided with a mounting hole 175 that penetrates the second insulation layer 174, and the light reflection region 180 is located in the mounting hole 175. The second insulation layer 174 can avoid a short circuit between a conductive structure (for example, a metal wire) of the substrate 140 and another electrical component. The light reflection region 180 is located in the mounting hole 175. In a process of forming the second insulation layer 174, an insulation film may be first formed, and the insulation film is etched to form the second insulation layer 174. In an etching process, the mounting hole 175 may be formed together to expose the light reflection region 180. No additional process may be set. In addition, no additional process for mounting the light reflection region 180 and the substrate 140 is required. This reduces both mounting costs and assembly and adjustment costs. In an embodiment in which a material of the second bottom plate 142 includes copper, an excellent gloss attribute of the copper may also reflect the laser. This helps determine the distance h between the lens component 112 and the surface of the substrate 140.

In another embodiment of this application, the light reflection region 180 may not be disposed in the mounting hole 175 of the second insulation layer 174. For example, a light reflection layer is disposed on a side that is of the second insulation layer 174 and that is away from the second bottom plate 142, and the light reflection region 180 is located on a surface of the light reflection layer. The light reflection layer may be, for example, a silver thin film or a copper thin film.

A material of the second insulation layer 174 is not limited in embodiments of this application. For example, the material of the second insulation layer 174 includes a liquid photoimagable solder mask (also referred to as green oil).

As described above, in the embodiment in which the substrate 140 includes the first bottom plate 141, the first bottom plate 141 and the second bottom plate 142 may be connected to form an integrated component. In the embodiment in which the substrate 140 includes the second insulation layer 174 and the first insulation layer 171, the first insulation layer 171 and the second insulation layer 174 may be connected to form an integrated component.

As described above, in the embodiment in which the light source module 100 includes the bracket 150, a vertical projection of the bracket 150 on the substrate 140 does not completely overlap the light reflection region 180. In this way, the laser incident to the light reflection region 180 can avoid the bracket 150, to prevent the bracket 150 from blocking the laser. For example, the substrate 140 may include three light reflection regions 180, and the three light reflection regions 180 are located in the first light transmission hole 151, the second light transmission hole 152, and the third light transmission hole 153 respectively.

FIG. 7 is a diagram of another structure of the image generation apparatus 11 according to an embodiment of this application. Refer to FIG. 7. The light source module 100 further includes an assembly board 144. The substrate 140 and the assembly board 144 are perpendicular to each other. The first light source 110, the second light source 120, and the third light source 130 are all connected to the substrate 140, and the light outlet direction of the first light source 110 is away from the assembly board 144. In this way, the light source module 100 may be connected to a structure like a housing through the assembly board 144 when being connected to the structure like the housing. Heat of the first light source 110, the second light source 120, and the third light source 130 is transferred to the assembly board 144 through the substrate 140, and then transferred to the structure like the housing. In some embodiments, no heat dissipation plate may be additionally disposed on a side that is of the substrate 140 and that is away from the first light source 110. In an embodiment in which a material of the substrate 140 includes copper, excellent thermal conductivity of the copper can improve heat dissipation performance. In addition, the heat is transferred to a side away from the light outlet direction of the first light source 110, so that impact of the heat on a component (for example, the light homogenizing element 13 in FIG. 2) on a light outlet side of the first light source 110 can be avoided.

In some embodiments of this application, the substrate 140 and the assembly board 144 are connected to form an integrated component. In this way, heat of the substrate 140 can be better transferred to the assembly board 144.

When the image generation apparatus 11 is connected to a structure like a housing of the display device 10, a direction in which the image generation apparatus 11 and the housing are assembled is parallel to the substrate 140, or a direction in which the image generation apparatus 11 and the housing are assembled is perpendicular to the substrate 140.

In addition, the image generation apparatus 11 further includes a light processing structure like the light homogenizing element 13 (as shown in FIG. 2). The light processing structure is located on a light outlet side of the light source module 100. In some embodiments, in a light outlet direction of the light source module 100, a size of the light processing structure is large. For example, in FIG. 7, k1 is greater than k2, and k1 is greater than k3. When the image generation apparatus 11 is mounted, an end with a large size of the image generation apparatus 11 is mounted with another structure, to prevent the image generation apparatus 11 from forming a cantilever structure with a large arm length.

For example, when the image generation apparatus 11 is connected to the housing of the display device 10, an end part, with a size of k1×k2, of the image generation apparatus 11 is connected to the housing of the display device 10, so that a distance from a free end of the image generation apparatus 11 to the housing is small, that is, k3. As described above, the substrate 140 and the assembly board 144 are perpendicular to each other. The light outlet direction of the first light source 110 is away from the assembly board 144. When the image generation apparatus 11 is connected to the housing of the display device 10, the assembly board 144 is connected to the housing. Heat of the light source module 100 is conducted to the housing through the assembly board 144, so that the light source module 100 has excellent heat dissipation performance, and connection performance of a joint between the image generation apparatus 11 and the housing is improved.

In this embodiment of this application, the substrate 140 may be a strip plate. In an embodiment in which the substrate 140 is a square plate, the side that is of the substrate 140 and that is away from the first light source 110 is connected to the housing of the display device 10, to transfer the heat of the first light source 110 to the housing of the display device 10.

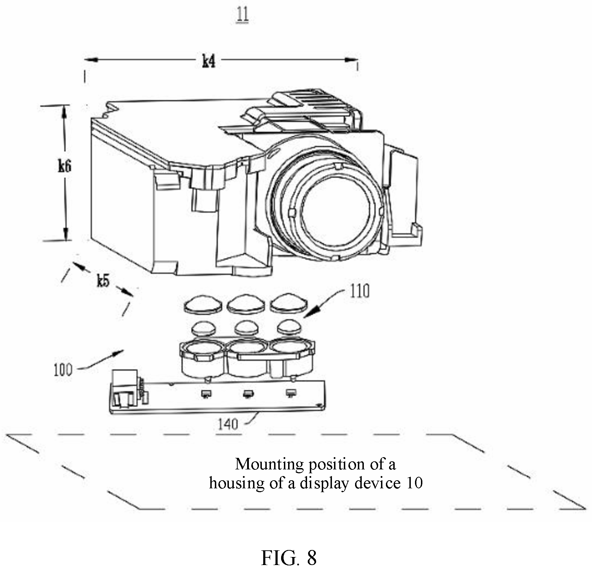

FIG. 8 is a diagram of still another structure of the image generation apparatus 11 according to an embodiment of this application. Refer to FIG. 8. The substrate 140 is a square plate, and the substrate 140 is disposed on an end face with a large size of the image generation apparatus 11. For example, the substrate 140 is disposed on an end face, with a size of k4×k5, of the image generation apparatus 11. k4 is greater than k5, and k4 is greater than k6. When the image generation apparatus 11 is connected to a housing of the display device 10, a side that is of the substrate 140 and that is away from the first light source 110 is connected to the housing of the display device 10, and the substrate 140 transfers heat of the first light source 110 to the housing of the display device 10. No additional heat transfer structure may be disposed. This reduces a volume of the image generation apparatus 11. In addition, a distance from a free end of the image generation apparatus 11 to the housing is small, that is, k6, to prevent the image generation apparatus 11 from forming a cantilever structure with a large arm length. This improves stability of the image generation apparatus 11.

It may be understood that the light outlet direction of the first light source 110 in FIG. 7 is different from a light outlet direction of the first light source 110 in FIG. 8. A mounting position of the light processing structure (for example, the light homogenizing element 13 in FIG. 2) in FIG. 7 and a mounting position of a light processing structure (for example, the light homogenizing element 13 in FIG. 2) in FIG. 8 may be set based on an optical path design, and directions of optical paths of the two may be different. This is not limited in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A light source module, wherein the light source module comprises:
a substrate;
a first light source;
a second light source; and
a third light source, wherein the first light source, the second light source, and the third light source are disposed side by side in a first direction, and are all connected to a same side of the substrate; and light outlet directions of the first light source, the second light source, and the third light source are parallel.

2. The light source module according to claim 1, wherein light-emitting efficiency of the first light source, the second light source, and the third light source is decreased progressively.

3. The light source module according to claim 1 or 2, wherein the light source module further comprises a controller, the first light source, the second light source, and the third light source are all in signal connection to the controller, and the controller is configured to control electrical signals input to the first light source, the second light source, and the third light source to decrease progressively.

4. The light source module according to any one of claims 1 to 3, wherein the light source module further comprises a first identification part and a second identification part, the first identification part and the second identification part are spaced apart on the substrate, a vertical projection of the first identification part on a surface of the substrate does not overlap any one of the first light source, the second light source, and the third light source, and a vertical projection of the second identification part on the surface of the substrate does not overlap any one of the first light source, the second light source, and the third light source.

5. The light source module according to claim 4, wherein the substrate comprises a first bottom plate and a first insulation layer that are stacked, the first insulation layer faces the first light source, the first light source, the second light source, and the third light source all penetrate the first insulation layer and are connected to the first bottom plate, the first identification part comprises a first through hole, the second identification part comprises a second through hole, and the first through hole and the second through hole are disposed on the first insulation layer.

6. The light source module according to any one of claims 1 to 5, wherein the first light source comprises a light-emitting device and a lens component, the light-emitting device is connected to the substrate, and the lens component is located on a light outlet side of the light-emitting device.

7. The light source module according to claim 6, wherein a light reflection region is disposed on the substrate, the light reflection region is located on a side that is of the substrate and that faces the lens component, a vertical projection of the light-emitting device on the surface of the substrate does not overlap the light reflection region, and a vertical projection of the lens component on the surface of the substrate at least partially overlaps the light reflection region.

8. The light source module according to claim 7, wherein the substrate comprises a second bottom plate and a second insulation layer that are stacked, an end that is of the light-emitting device and that is away from the lens component penetrates the second insulation layer and is connected to the second bottom plate, the second insulation layer is located between the lens component and the second bottom plate, the second insulation layer is provided with a mounting hole that penetrates the second insulation layer, and the light reflection region is located in the mounting hole.

9. The light source module according to any one of claims 1 to 8, wherein the light source module further comprises a bracket, the bracket is connected to a side that is of the substrate and that faces the first light source, the bracket is provided with a first light transmission hole, a second light transmission hole, and a third light transmission hole, the first light source is located in the first light transmission hole, the second light source is located in the second light transmission hole, and the third light source is located in the third light transmission hole.

10. The light source module according to any one of claims 1 to 9, wherein the light source module further comprises an assembly board, the substrate and the assembly board are perpendicular to each other, and the light outlet direction of the first light source is away from the assembly board.

11. The light source module according to claim 10, wherein the substrate and the assembly board are connected to form an integrated component.

12. The light source module according to any one of claims 1 to 11, wherein the first light source comprises a green light-emitting device, the second light source comprises a blue light-emitting device, the third light source comprises a red light-emitting device, and the green light-emitting device, the blue light-emitting device, and the red light-emitting device are all connected to the same side of the substrate.

13. An image generation apparatus, wherein the image generation apparatus comprises a light homogenizing element and the light source module according to any one of claims 1 to 12, the light homogenizing element is configured to homogenize light emitted from the first light source, the second light source, and the third light source, and optical paths in which the light emitted from the first light source, the second light source, and the third light source propagates to the light homogenizing element are increased progressively.

14. The image generation apparatus according to claim 13, wherein the image generation apparatus further comprises a first reflection element, a second reflection element, and a third reflection element that are disposed side by side in the first direction; and
the first reflection element is configured to: reflect light emitted from the first light source, and then project reflected light to the light homogenizing element through the second reflection element and the third reflection element in sequence; the second reflection element is configured to: reflect light emitted from the second light source, and then project reflected light to the light homogenizing element through the third reflection element; and the third reflection element is configured to: reflect light emitted from the third light source to the light homogenizing element.

15. A display device, wherein the display device comprises a processor and the image generation apparatus according to claim 13 or 14, and the processor is configured to send image data to the image generation apparatus.

16. A transportation means, wherein the transportation means comprises a reflection element and the display device according to claim 15, the display device is configured to emit a light beam, and the reflection element is configured to reflect the light beam emitted from the display device.
